# EUROPÄISCHE PATENTSCHRIFT

(11) **EP 2 366 604 B1**
(45) Veröffentlichungstag und Bekanntmachung des Hinweises auf die Patenterteilung: **17.10.2012**
(21) Anmeldenummer: 10156863.2
(22) Anmeldetag: 18.03.2010
(51) Int. Cl.: B62D 11/04, B62D 11/06

(54) **Geländegängiges Personenkraftfahrzeug**
All-terrain passenger vehicle
Véhicule de transport de passagers tout terrain

(43) Veröffentlichungstag der Anmeldung: 21.09.2011
(73) Patentinhaber: Metallumform Gmbh, 34346 Hann.Münden (DE)
(72) Erfinder: Stell, Martin, 34346 Hann.Münden (DE); Hinder, Axel, 33178 Borchen (DE)
(74) Vertreter: Rehberg Hüppe + Partner

(56) Entgegenhaltungen:
- EP-A1- 1 693 232
- WO-A1-02/28677
- WO-A2-2009/082828
- DE-A1- 3 543 518
- JP-A- 2006 224 820

## Beschreibung

### TECHNISCHES GEBIET DER ERFINDUNG

Die Erfindung bezieht sich auf ein Personenkraftfahrzeug mit den Merkmalen des Oberbegriffs des unabhängigen Patentanspruchs 1.

Insbesondere betrifft die vorliegende Erfindung ein Personenkraftfahrzeug, das sowohl straßentauglich als auch geländegängig ist und das trotz seines aus Gleisketten oder Radsätze von synchron angetriebenen Rädern bestehenden Fahrwerks auch für höhere Geschwindigkeiten im Bereich einiger zehn Stundenkilometer geeignet ist.

### STAND DER TECHNIK

Aus der WO 2007/116628 A ist ein elektrisch angetriebenes Baustellenfahrzeug mit einem Fahrwerk, das zwei parallel zueinander angeordnete angetriebene Gleisketten aufweist, mit einem Antrieb, der für jede Gleiskette mindestens einen eigenen Elektromotor aufweist, und mit einer Lenkeinrichtung, die eine von einem Fahrer des Baustellenfahrzeugs betätigbare Richtungswahleinrichtung aufweist und die abhängig von der Betätigung der Richtungswahleinrichtung Drehgeschwindigkeiten der Elektromotoren relativ zueinander einstellt, bekannt. Die Elektromotoren für die beiden Gleisketten des bekannten Baustellenfahrzeugs werden aus einer Batterie gespeist, die nach ihrer Entladung gegen eine aufgeladene Batterie ausgetauscht wird. Die hieraus resultierende Reichweitenbeschränkung stellt für Baustellenfahrzeuge keinen größeren Nachteil dar.

Aus der US 2003/085677 A ist ein Fahrzeug bekannt, dessen Fahrwerk zwei parallel zueinander angeordnete angetriebene Gleisketten aufweist. Ein Antrieb dieses bekannten Fahrzeugs umfasst für jede Gleiskette einen eigenen Elektromotor. Der Elektromotor wird aus einem Generator zur Bereitstellung von elektrischer Energie gespeist. Dieser Generator weist eine elektrische Maschine auf, die von einer Brennkraftmaschine angetrieben wird. Die Brennkraftmaschine dient originär zum Antrieb eines Werkzeugs, wie beispielsweise einer Schneefräse, das mit dem Fahrzeug verfahren wird. Der Bediener des Fahrzeugs läuft dabei hinter dem Fahrzeug her und betätigt dabei dessen Lenkeinrichtung.

Aus der WO 2009/082828 A2 ist ein Geländefahrzeug bekannt, bei dem zwei parallel zueinander angeordnete Gleisketten über ein Differentialgetriebe angetrieben werden. Dabei wirkt neben einem Antriebsmotor auch ein Lenkmotor eingangsseitig auf das Differentialgetriebe ein. Der Lenkmotor verursacht eine Differenzgeschwindigkeit zwischen den beiden Gleisketten. Sowohl der Antriebsmotor als auch der Lenkmotor kann je ein elektrischer Motor sein. Vorzugsweise ist der Lenkmotor ein Hydraulikmotor, der von einer Pumpe angetrieben wird, die ihrerseits von einer Brennkraftmaschine angetrieben wird, die als Antriebsmotor dient.

Aus der JP 2006 224820 A ist ein Raupenfahrzeug in Form eines Bulldozers, Schaufelbaggers, Krans oder anderen Raupenfahrzeugs, das auf einer Baustelle zum Transport oder dergleichen verwendet wird, bekannt, dessen Fahrwerk, Antrieb und Lenkeinrichtung die Merkmale des Oberbegriffs des unabhängigen Patentanspruchs 1 aufweisen. Bei diesem Raupenfahrzeug wird eine Zielgeschwindigkeit aus der Einstellung eines Gaspedals, eines Schalthebels und einer Bremse berechnet und hieraus werden unter Berücksichtigung der Stellung der Richtungswahleinrichtung die Drehmomente für die den beiden Raupen zugeordneten Elektromotoren berechnet. Dieses Konzept ändert sich nicht mit der berechneten Zielgeschwindigkeit oder der tatsächlichen Geschwindigkeit des bekannten Raupenfahrzeugs.

### AUFGABE DER ERFINDUNG

Der Erfindung liegt die Aufgabe zugrunde, ein Personenkraftfahrzeug mit den Merkmalen des Oberbegriffs des unabhängigen Patentanspruchs 1 aufzuzeigen, dessen Fahrtrichtung auch bei hohen Geschwindigkeiten stabil ist.

### LÖSUNG

Erfindungsgemäß wird diese Aufgabe durch ein Personenkraftfahrzeug mit den Merkmalen des Patentanspruchs 1 gelöst. Bevorzugte Ausführungsformen des neuen Personenkraftfahrzeugs sind in den abhängigen Patentansprüchen 2 bis15 definiert.

### BESCHREIBUNG DER ERFINDUNG

Bei dem neuen Personenkraftfahrzeug, dessen Antrieb für jede Gleiskette bzw. jeden Radsatz aus aufeinanderfolgenden synchron angetriebenen Rädern mindestens einen eigenen Elektromotor aufweist, ist mindestens ein Generator zur Bereitstellung von elektrischer Energie für die Elektromotoren auf dem Personenkraftfahrzeug vorgesehen. D. h., die elektrische Energie für die Elektromotoren wird unmittelbar auf dem Personenkraftfahrzeug erzeugt. Zumindest kann sie dort erzeugt werden. Hierdurch wird die Reichweite des neuen Personenkraftfahrzeugs ganz erheblich erhöht.

Zwischen den mindestens einen Generator und die Elektromotoren des neuen Personenkraftfahrzeugs ist vorzugsweise eine Batterie oder eine elektrische Kapazität, bspw. in Form eines oder mehrerer sogenannter Supercaps, geschaltet. Dieser Puffer kann es ermöglichen, die Elektromotoren kontinuierlich mit elektrischer Energie zu versorgen, ohne den Generator andauernd zu betreiben.

Der Generator des neuen Personenkraftfahrzeugs kann eine Brennstoffzelle bzw. ein so genannter Brennstoffzellenstack sein, die/der elektrische Energie durch Umsetzung von Wasserstoff mit Sauerstoff zu Wasser erzeugt. Der Generator kann aber auch eine elektrische Maschine sein, die von einer Brennkraftmaschine angetrieben wird. Dies ist die konventionellere und damit einfacher zu realisierende Ausführungsform des neuen Personenkraftfahrzeugs.

Bei dem neuen Personenkraftfahrzeug sind die beiden Gleisketten oder Radsätze in Bezug auf ihre Drehbewegungen vollständig mechanisch entkoppelt. D. h., es gibt kein Differential, dass für beide Gleisketten oder Radsätze zentral aufgebrachte Drehmomente auf die beiden Gleisketten oder Radsätze verteilt, sondern das Drehmoment für jede Gleiskette bzw. jeden Radsatz wird mit Hilfe mindestens eines Elektromotors völlig getrennt von dem Drehmoment für die jeweils andere Gleiskette bzw. den jeweils anderen Radsatz erzeugt. Auf diese Weise entfallen auch erhebliche bauliche Beschränkungen im Hinblick auf den Raum zwischen den beiden Gleisketten bzw. Radsätzen, die sonst durch Differentialgetriebe oder dergleichen gegeben sind.

Die Elektromotoren, die die beiden Gleisketten oder Radsätze des neuen Personenkraftfahrzeugs antreiben, sind oberhalb einer Grenzgeschwindigkeit des Personenkraftfahrzeugs drehzahlgesteuert. Zu diesem Zweck können sie z. B. als Schrittmotoren ausgebildet sein und/oder sie weisen Drehwinkel- und/oder Drehzahlsensoren auf. So ist es möglich, dass die Lenkeinrichtung die tatsächliche Differenzgeschwindigkeit zwischen den beiden Gleisketten bzw. Radsätzen kontrolliert, wobei die tatsächlichen Geschwindigkeiten oder zurückgelegten Wege der beiden Gleisketten bzw. Radsätze abgeglichen werden. Damit wird eine Stabilisierung der gewünschten Fahrtrichtung des neuen Personenkraftfahrzeugs auch bei hohen Geschwindigkeiten erreicht. Zu der erfindungsgemäßen Drehzahlsteuerung der Elektromotoren gehört es vorzugsweise auch, dass im Falle des teilweisen oder vollständigen Ausfalls eines der Elektromotoren, der eine Geschwindigkeitsänderung der zugehörigen Gleiskette oder eines Rads des zugehörigen Radsatzes zur Folge hat, die anderen Elektromotoren so angesteuert werden, dass die relative Differenzgeschwindigkeit der Gleisketten bzw. Radsätze gleichbleibt. Der Ausfall für damit allenfalls zu einem ungewollten, aber kontrollierten Abbremsen des Personenkraftfahrzeugs. Unterhalb der Grenzgeschwindigkeit die höchstens bei 10 km/h, vorzugsweise höchstens bei 7 km/h und am meistens höchstens bei 5 km/h liegt, erfolgt die Ansteuerung der Elektromotoren, die die beiden Gleisketten oder Radsätze des neuen Personenkraftfahrzeugs antreiben, statt auf definierte Drehzahlen auf bestimmte Drehmomente hin.

Ein großer Vorteil ergibt sich bei dem neuen Personenkraftfahrzeug dadurch, dass die Elektromotoren in Antriebsräder der Gleisketten oder in die Räder der Radsätze integriert sein können, so dass nur die von ihnen aufgebrachten Drehmomente gegenüber der Karosserie des Personenkraftfahrzeugs abgestützt werden müssen. Bei Gleisketten sind die einzelnen Stützräder über die Gleisketten miteinander verbunden. Bei Radsätzen können hierfür zusätzliche Ketten vorgesehen sein. Es können aber auch alle Räder der Radsätze jeweils über einen Elektromotor angetrieben werden. Auch generell können jeder Gleiskette bzw. jedem Radsatz mehrere untereinander synchronisierte Elektromotoren zugeordnet sein, um das insgesamt benötigte Drehmoment aufzubringen.

Mehrere Elektromotoren je Gleiskette bzw. Radsatz können aber auch dazu vorgesehen sein, unterschiedliche Geschwindigkeitsbereiche des neuen Personenfahrzeugs abzudecken. Dabei können die jeweils nicht benötigten Elektromotoren entweder gänzlich in den Leerlauf geschaltet werden oder zum einfachen Mitlaufen angesteuert werden.

Mehrere Elektromotoren je Gleiskette bzw. Radsatz können zudem dazu vorgesehen sein, unterschiedliche Drehrichtungen der Gleisketten bzw. Radsätze des neuen Personenkraftfahrzeugs abzudecken. Mit den unterschiedlichen Drehrichtungen der Gleisketten bzw. Radsätze des neuen Personenkraftfahrzeugs ist zum einen gemeint, dass dieses auch rückwärts fahren kann, und zum anderen, dass es durch gegenläufige Drehrichtungen der Gleisketten bzw. Radsätze auf der Stelle drehen kann. Diese Möglichkeiten können auch mit Elektromotoren realisiert werden, die ihre angetrieben Drehrichtung ändern können, oder mit Hilfe von die Drehrichtung der Elektromotoren reversierenden Getrieben.

Jeder Elektromotor des neuen Personenkraftfahrzeugs kann auch als Bewegungsenergie zurückgewinnende elektromagnetische Bremse eingesetzt werden.

Zur Klarstellung ist festzuhalten, dass sich das Fahrwerk des neuen Personenfahrzeugs in aller Regel ausschließlich über die beiden Gleisketten oder Radsätze am Boden abstützt. D. h., die Lenkeinrichtung kann das neue Personenkraftfahrzeug nur durch unterschiedliche Geschwindigkeiten der beiden Gleisketten bzw. Radsätze hinsichtlich seiner Fahrtrichtung lenken.

Um die gewünschte Geländegängigkeit des neuen Personenkraftfahrzeugs sicherzustellen, weist seine Karosserie zwischen den Gleisketten oder Radsätzen vorzugsweise eine Bodenfreiheit von mindestens 20 cm, noch mehr bevorzugt von mindestens 25 cm auf. Es versteht sich, dass die Karosserie an der Unterseite des neuen Personenkraftfahrzeugs oberhalb der Bodenfreiheit eine möglichst glatte Kontur aufweist.

Die Richtungswahleinrichtung der Lenkeinrichtung des neuen Personenkraftfahrzeugs weist vorzugsweise einen in seiner Grundstellung quer zur Fahrtrichtung des Personenfahrzeugs ausgerichteten und um eine in der Längsmittelebene des Personenfahrzeugs verlaufende Schwenkachse verschwenkbaren Lenker auf. Dieser Lenker ist daher vergleichbar mit einem Fahrrad-, Motorrad- oder Quad-Lenker. Er verdreht aber nicht Laufrichtung irgendwelcher Räder zur Karosserie des neuen Personenkraftfahrzeugs, sondern abhängig von seiner Betätigungsstellung steuert die Lenkeinrichtung die Elektromotoren des neuen Personenkraftfahrzeugs auf eine Differenzgeschwindigkeit an.

Ein Fahrersitz des neuen Personenkraftfahrzeugs kann insbesondere in der Längsmittelebene des Personenkraftzeugs vorgesehen sein, wobei Fußaufstellflächen für den Fahrer auf beiden Seiten längs der Fahrtrichtung des Personenkraftfahrzeugs hinter dem Lenker bis maximal unter dem Fahrersitz vorgesehen sind. Der Fahrer kann somit leicht "aus dem Sattel steigen", um das neue Personenkraftfahrzeug auszubalancieren. Dass die Fußaufstellflächen bis maximal unter den Fahrersitz vorgesehen sind, bedeutet jedoch nicht, dass sie nicht auch noch weiter nach hinten verlaufen können, um dort beispielsweise Platz für die Füße eines Beifahrers oder Passagiers des neuen Personenkraftfahrzeugs zu bieten. Bei dem neuen Personenkraftfahrzeugs ist es ganz grundsätzlich bevorzugt, dass mindestens ein Passagiersitz vorhanden ist.

In einer besonders bevorzugten Ausführungsform des neuen Personenkraftfahrzeugs ist dessen Karosserie schwimmfähig, so dass das Personenkraftfahrzeug nicht nur geländegängig sondern auch ein Amphibienfahrzeug ist. Dabei kann der Antrieb des Personenkraftfahrzeugs beim Schwimmen ebenfalls durch die Gleisketten oder Radsätze bewirkt werden.

Weiterhin ist es bevorzugt, wenn ein Sitzbereich des neuen Personenkraftfahrzeugs in einer zumindest nach oben geschlossenen Kabine vorgesehen ist. Diese Kabine kann insbesondere dann, wenn das neue Personenkraftfahrzeug ein Amphibienfahrzeug ist, auch rundum verschließbar sein, um das Eindringen von Wasser zu verhindern.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile von erfindungsgemäßen Ausführungsformen zwingend erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist möglich und wird hiermit angeregt. Dies betrifft auch solche Merkmale, die in separaten Zeichnungen dargestellt sind oder bei deren

Beschreibung genannt werden. Diese Merkmale können auch mit Merkmalen unterschiedlicher Patentansprüche kombiniert werden.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: skizziert das Antriebskonzept einer ersten Ausführungsform des neuen Personenkraftfahrzeugs.
- **Fig. 2**: skizziert die Relativlage eines Fahrer- und eines Beifahrersitzes, von Fußaufstellflächen für den Fahrer und den Beifahrer, eines Lenkers und der Gleisketten des neuen Personenkraftfahrzeugs gemäß Fig. 1 in einer Ansicht von oben.
- **Fig. 3**: skizziert das neue Personenkraftfahrzeug gemäß Fig. 1 und 2 in einer Seitenansicht.
- **Fig. 4**: skizziert das Antriebskonzept bei einer anderen Ausführungsform des neuen Personenkraftfahrzeugs; und
- **Fig. 5**: zeigt das Fig. 4 entsprechende Personenkraftfahrzeug in einer Seitenansicht.

### FIGURENBESCHREIBUNG

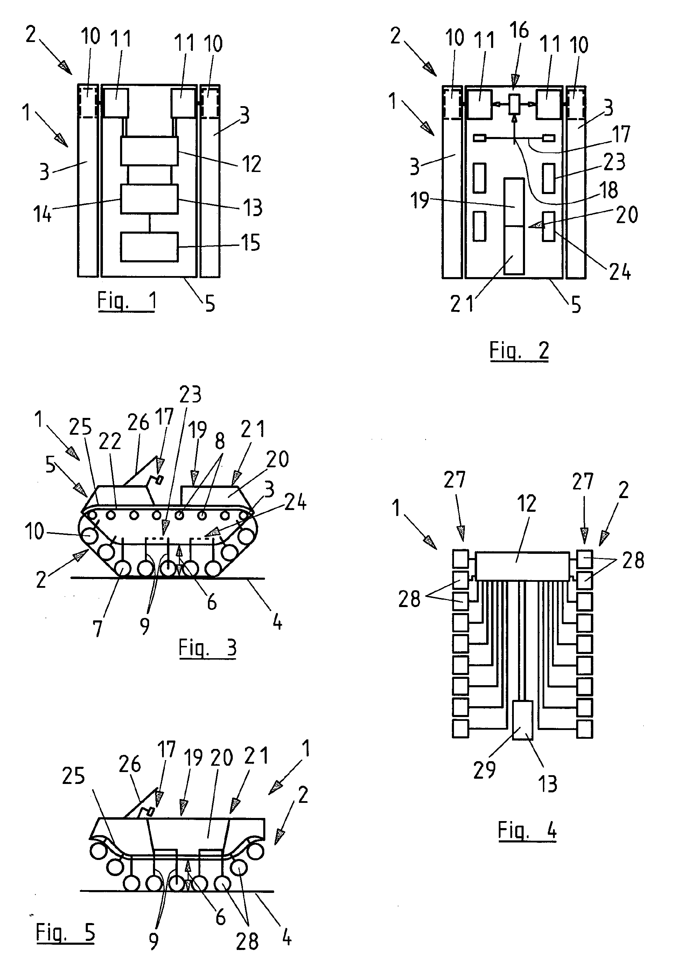

Das in den **Fig. 1** bis **Fig. 3** skizzierte Personenkraftfahrzeug 1 weist ein Fahrwerk 2 mit zwei parallel zueinander verlaufenden Gleisketten 3 auf. Das Personenkraftfahrzeug 1 steht ausschließlich über die beiden Gleisketten 3 auf dem Boden 4 auf. Zwischen den Gleisketten 3 weist eine Karosserie 5 des Personenkraftfahrzeugs 1 hingegen eine hohe Bodenfreiheit 6 auf. Die Gleisketten 3 laufen um untere Stützräder 7 und obere Stützräder 8 herum, die jeweils an der Karosserie 5 gelagert sind und von denen zumindest die untersten unteren Stützräder 7 an in den Figuren nur angedeuteten Federbeinen 9 gelagert sind. Das vorderste der unteren Stützräder 7 ist zugleich als Antriebsrad 10 für die jeweilige Gleiskette 3 vorgesehen. Für jedes Antriebsrad 10 weist das Personenkraftfahrzeug 1 einen eigenen Elektromotor 11 auf. Die beiden Elektromotoren 11 werden dabei aus einer Batterie 12 mit elektrischer Energie versorgt, die über einen Generator 13 in Form einer elektrischen Maschine 14, die von einer Brennkraftmaschine 15 angetrieben wird, kontinuierlich oder intervallweise nachgeladen wird. Die Lenkung des Personenkraftfahrzeugs 1 erfolgt durch eine Lenkeinrichtung 16, die die Elektromotoren 11 in Abhängigkeit von der Schwenkstellung eines Lenkers 17 um eine Schwenkachse 18 in der Längsmittelebene des Personenkraftfahrzeugs 1 ansteuert. Dabei können an dem Lenker 17 auch Mittel zur Anforderung der absoluten Geschwindigkeit des Personenkraftfahrzeugs 1 vorgesehen sein. Für den Fahrer des Personenkraftfahrzeugs 1, der den Lenker 7 bedient, ist ein Fahrersitz 19 auf einer Sitzbank 20 vor einem Beifahrersitz 21 vorgesehen. Neben und vor der Sitzbank 21 zwischen den Gleisketten 3 und unterhalb deren Obertrum 22 sind Fußaufstellflächen 23 und 24 für den Fahrer und den Beifahrer ausgebildet. Dabei verläuft eine Abdeckung 25, die Teil der an ihrer Oberseite geschlossenen Karosserie 5 des Personenkraftfahrzeugs 1 ist, oberhalb des Obertrums 22. Dieses Detail geht nur aus Fig. 3 hervor. In den schematischen Darstellungen der Fig. 1 und Fig. 2 ist es weggelassen. Fahrer und Beifahrer des neuen Personenkraftfahrzeugs sind durch eine Windschutzscheibe 26 geschützt, die zu einer zumindest nach obenhin geschlossenen Fahrerkabine ergänzt werden kann (nicht dargestellt).

Das in den **Fig. 4** und **Fig. 5** skizzierte Personenkraftfahrzeug 1 unterscheidet sich von dem bisher beschriebenen dadurch, dass sein Fahrwerk 2 keine Gleisketten, sondern zwei parallele Radsätze 27 aus hintereinander angeordneten Rädern 28 aufweist. Dabei sind hier in alle Räder 28 Elektromotoren 11 integriert, die über jeden Radsatz 27 hinweg synchronisiert sind. Diese Elektromotoren werden aus der Batterie 12 gespeist, welche hier durch einen Generator 13 in Form eines Brennstoffzellenstacks 29 nachgeladen wird. Aus der Seitenansicht gemäß Fig. 5 wird deutlich, dass das Personenkraftfahrzeug 1 gemäß den Fig. 3 und Fig. 4 bezüglich der Sitzbank 20 leichter zugänglich ist, weil der Obertrum der Gleisketten entfällt und insoweit die Abdeckung 25 niedriger verlaufen kann. Die Lenkung des Personenkraftfahrzeugs 1 gemäß den Fig. 4 und Fig. 5 erfolgt aber ebenfalls über einen Lenker 17.

### BEZUGSZEICHENLISTE

- 1: Personenkraftfahrzeug
- 2: Fahrwerk
- 3: Gleiskette
- 4: Boden
- 5: Karosserie
- 6: Bodenfreiheit
- 7: unteres Stützrad
- 8: oberes Stützrad
- 9: Federbein
- 10: Antriebsrad
- 11: Elektromotor
- 12: Batterie
- 13: Generator
- 14: elektrische Maschine
- 15: Brennkraftmaschine
- 16: Lenkeinrichtung
- 17: Lenker
- 18: Schwenkachse
- 19: Fahrersitz
- 20: Sitzbank
- 21: Fahrersitz
- 22: Obertrum
- 23: Fußaufstellfläche Fahrer
- 24: Fußaufstellfläche Beifahrer
- 25: Abdeckung
- 26: Windschutzscheibe
- 27: Radsatz
- 28: Rad
- 29: Brennstoffzellenstack

## Patentansprüche

1. Personenkraftfahrzeug (1) mit einem Fahrwerk (2), das zwei parallel zueinander angeordnete angetriebene Gleisketten (3) oder zwei parallel zueinander angeordnete Radsätze (27) aus aufeinander folgenden synchron angetriebenen Rädern (28) aufweist, mit einem Antrieb, der für jede Gleiskette (3) oder jeden Radsatz (27) mindestens einen eigenen Elektromotor (11) aufweist, und mit einer Lenkeinrichtung (16), die eine von einem Fahrer des Personenkraftfahrzeugs (1) betätigbare Richtungswahleinrichtung aufweist und die abhängig von der Betätigung der Richtungswahleinrichtung Drehmomente der Elektromotoren (11) relativ zueinander einstellt, wobei mindestens ein Generator (13) zur Bereitstellung von elektrischer Energie für die Elektromotoren (11) auf dem Personenkraftfahrzeug (1) vorgesehen ist, **dadurch gekennzeichnet, dass** die Lenkeinrichtung die Elektromotoren (11) nur unterhalb einer Grenzgeschwindigkeit des Personenkraftfahrzeugs (1) auf bestimmte Drehmomente und oberhalb der Grenzgeschwindigkeit auf bestimmte Drehzahlen hin ansteuert.

2. Personenkraftfahrzeug (1) nach Anspruch 1, **dadurch gekennzeichnet, dass** zwischen den mindestens einen Generator (13) und die Elektromotoren (11) mindestens eine Batterie (12) oder eine elektrische Kapazität als Puffer geschaltet ist.

3. Personenkraftfahrzeug (1) nach Anspruch 1 oder 2, **dadurch gekennzeichnet, dass** der mindestens eine Generator (13) eine elektrische Maschine (14) ist, die von einer Brennkraftmaschine (15) angetrieben wird.

4. Personenkraftfahrzeug (1) nach mindestens einem der vorhergehenden Ansprüche, **dadurch gekennzeichnet, dass** die beiden Gleisketten (3) oder Radsätze (27) in Bezug auf ihre Drehbewegungen mechanisch entkoppelt sind.

5. Personenkraftfahrzeug (1) nach mindestens einem der vorhergehenden Ansprüche, **dadurch gekennzeichnet, dass** die Elektromotoren (11) Schrittmotoren sind und/oder Drehwinkel- und/oder Drehzahlsensoren aufweisen.

6. Personenkraftfahrzeug (1) nach mindestens einem der vorhergehenden Ansprüche, **dadurch gekennzeichnet, dass** die Grenzgeschwindigkeit des Personenkraftfahrzeugs höchstens bei 10 km/h, vorzugsweise höchstens bei 7 km/h und am meistens höchstens bei 5 km/h liegt.

7. Personenkraftfahrzeug (1) nach mindestens einem der vorhergehenden Ansprüche, **dadurch gekennzeichnet, dass** jeder Gleiskette (3) oder jedem Radsatz (27) mehrere untereinander synchronisierte Elektromotoren (11) zugeordnet sind.

8. Personenkraftfahrzeug (1) nach mindestens einem der vorhergehenden Ansprüche, **dadurch gekennzeichnet, dass** jeder Gleiskette (3) oder jedem Radsatz (27) mehrere Elektromotoren (11) für unterschiedliche Geschwindigkeitsbereiche zugeordnet sind.

9. Personenkraftfahrzeug (1) nach mindestens einem der vorhergehenden Ansprüche, **dadurch gekennzeichnet, dass** sich das Fahrwerk (2) ausschließlich über die beiden Gleisketten (3) oder Radsätze (27) am Boden (4) abstützt.

10. Personenkraftfahrzeug (1) nach mindestens einem der vorhergehenden Ansprüche, **dadurch gekennzeichnet, dass** eine Karosserie (5) des Personenkraftfahrzeugs zwischen den Gleisketten (3) oder Radsätzen (27) eine Bodenfreiheit (6) von mindestens 20 cm aufweist.

11. Personenkraftfahrzeug (1) nach mindestens einem der vorhergehenden Ansprüche, **dadurch gekennzeichnet, dass** die Richtungswahleinrichtung einen in seiner Grundstellung quer zur Fahrtrichtung des Personenfahrzeugs (1) ausgerichteten und um eine in der Längsmittelebene des Personenfahrzeugs verlaufende Schwenkachse (18) verschwenkbaren Lenker (17) aufweist.

12. Personenkraftfahrzeug (1) nach Anspruch 11, **dadurch gekennzeichnet, dass** ein Fahrersitz (19) in der Längsmittelebene des Personenkraftfahrzeugs vorgesehen ist und dass Fußaufstellflächen (23) für den Fahrer auf beiden Seiten längs der Fahrtrichtung des Personenkraftfahrzeugs (1) hinter dem Lenker (17) bis maximal unter dem Fahrersitz (19) vorgesehen sind.

13. Personenkraftfahrzeug (1) nach mindestens einem der vorhergehenden Ansprüche, **dadurch gekennzeichnet, dass** mindestens ein Passagiersitz vorgesehen ist.

14. Personenkraftfahrzeug (1) nach mindestens einem der vorhergehenden Ansprüche, **dadurch gekennzeichnet, dass** die Karosserie (5) des Personenkraftfahrzeugs (1) schwimmfähig ist.

15. Personenkraftfahrzeug (1) nach mindestens einem der vorhergehenden Ansprüche, **dadurch gekennzeichnet, dass** ein Sitzbereich des Personenkraftfahrzeugs (1) in einer zumindest nach oben geschlossenen und vorzugsweise rundum verschließbaren Kabine vorgesehen ist.

## Claims

1. Passenger vehicle (1) comprising a running gear (2) including two driven crawler chains (3) arranged in parallel to each other or two wheel sets (27) arranged in parallel to each other and consisting of synchronously driven wheels (28) following each other; a drive including at least one separate electro motor (11) per each crawler chain (3) or each wheel set (27); and a steering device (16) including a direction selection device actuatable by a driver of the passenger vehicle (1) and adjusting the torques of the electro motors (11) with regard to each other depending on the actuation of the direction selection device, wherein at least one generator (13) is arranged on the passenger vehicle (1) for providing electric energy for the electro motors (11), **characterised in that** the steering device, solely below a limit velocity of the passenger vehicle (1), controls the electro motors (11) for certain torques and, above the limit velocity, for certain rotation speeds.

2. Passenger vehicle (1) of claim 1, **characterised in that** at least one battery (12) or an electric capacitance is connected as buffer between the at least one generator (13) and the electro motors (11).

3. Passenger vehicle (1) of claim 1 or 2, **characterised in that** the at least one generator (13) is an electric machine (14) propelled by a combustion engine (15).

4. Passenger vehicle (1) of at least one of the preceding claims, **characterised in that** the two crawler chains (3) or wheel sets (27) are mechanically decoupled with regard to their rotational movements.

5. Passenger vehicle (1) of at least one of the preceding claims, **characterised in that** the electro motors (11) are step motors and/or comprise rotation angle and/or rotation speed sensors.

6. The passenger vehicle (1) of at least one of the preceding claims, **characterised in that** the limit velocity of the passenger vehicle is about 10 km/h at maximum, preferably about 7 km/h at maximum and mostly about 5 km/h at maximum.

7. The passenger vehicle (1) of at least one of the preceding claims, **characterised in that** several electro motors (11) synchronised with regard to each other are assigned to each crawler chain (3) or each wheel set (27).

8. Passenger vehicle (1) of at least one of the preceding claims, **characterised in that** several electro motors (11) for different velocity ranges are assigned to each crawler chain (3) or each wheel set (27).

9. Passenger vehicle (1) of at least one of the preceding claims, **characterised in that** the running gear (2) is supported at the ground (4) via the two crawler chains (3) or wheel sets (27) only.

10. Passenger vehicle (1) of at least one of the preceding claims, **characterised in that** a body (5) of the passenger vehicle (1) displays a ground clearance (6) of at least 20 cm between the crawler chains (3) or wheel sets (27).

11. Passenger vehicle (1) of at least one of the preceding claims, **characterised in that** the direction selection device comprises a handle bar (17) aligned perpendicular to the driving direction of the passenger vehicle (1) in a basic position and swivelling about a swivelling axis (18) running in the longitudinal middle plane of the passenger vehicle.

12. Passenger vehicle (1) of claim 11, **characterised in that** a driver seat (19) is provided in the longitudinal middle plane of the passenger vehicle and that foot rest areas (23) for the driver on both sides along the driving direction of the passenger vehicle (1) are provided behind the handle bar (17) up to, at maximum, below the driver seat (19).

13. Passenger vehicle (1) of at least one of the preceding claims, **characterised in that** at least one passenger seat is provided.

14. Passenger vehicle (1) of at least one of the preceding claims, **characterised in that** the body (5) of the passenger vehicle (1) is floatable.

15. Passenger vehicle (1) of at least one of the preceding claims, **characterised in that** a seat area of the passenger vehicle (1) is provided within a coach which is at least closed at its top and preferably closable all around.

## Revendications

1. Véhicule de transport de passagers (1) comportant un châssis (2) qui présente deux chenilles (3) entraînées, disposées en parallèle ou deux jeux de roues (27) agencés en parallèle et composés de roues (28) subséquentes entraînées de manière synchrone, comportant un entraînement qui présente au moins un moteur électrique individuel (11) pour chaque chenille (3) ou chaque jeu de roues (27) et comportant un mécanisme de direction (16) qui présente un dispositif de sélection de la direction pouvant être activé par le conducteur du véhicule de transport de passagers (1) et qui règle les uns par rapport aux autres des couples de rotation des moteurs électriques (11) en fonction de l'actionnement du dispositif de sélection de la direction, sachant qu'on a prévu au moins un générateur (13), pour la fourniture d'énergie électrique aux moteurs électriques (11), sur le véhicule de transport de passagers (1), **caractérisé en ce que** le mécanisme de direction commande les moteurs électriques (11) uniquement en dessous d'une vitesse limite du véhicule de transport de passagers (1), à des couples de rotation précis et au-dessus de la vitesse limite, à des couples de rotation précis.

2. Véhicule de transport de passagers (1) selon la revendication 1, **caractérisé en ce qu'**on a monté, entre le ou les générateurs (13) et les moteurs électriques (11), au moins une batterie (12) ou une capacité électrique en guise de tampon.

3. Véhicule de transport de passagers (1) selon la revendication 1 ou 2, **caractérisé en ce que** le ou les générateurs (13) sont une machine électrique (14) qui est entraînée par un moteur à combustion interne (15).

4. Véhicule de transport de passagers (1) selon au moins l'une quelconque des revendications précédentes, **caractérisé en ce que** les deux chenilles (3) ou jeux de roues (27) sont mécaniquement découplés en ce qui concerne leurs mouvements de rotation.

5. Véhicule de transport de passagers (1) selon au moins l'une quelconque des revendications précédentes, **caractérisé en ce que** les moteurs électriques (11) sont des moteurs pas-à-pas et/ou comportent des capteurs d'angle de rotation et/ou des capteurs de régime.

6. Véhicule de transport de passagers (1) selon au moins l'une quelconque des revendications précédentes, **caractérisé en ce que** la vitesse limite du véhicule de transport de passagers s'élève à 10km/h maximum, de préférence à 7km/h maximum et plus généralement à 5km/h maximum.

7. Véhicule de transport de passagers (1) selon au moins l'une quelconque des revendications précédentes, **caractérisé en ce qu'**on a attribué, à chaque chenille (3) ou à chaque jeu de roues (27), plusieurs moteurs électriques synchronisés (11).

8. Véhicule de transport de passagers (1) selon au moins l'une quelconque des revendications précédentes, **caractérisé en ce qu'**on a attribué, à chaque chenille (3) ou à chaque jeu de roues (27), plusieurs moteurs électriques (11) pour des plages de vitesse différentes.

9. Véhicule de transport de passagers (1) selon au moins l'une quelconque des revendications précédentes, **caractérisé en ce que** le châssis (2) prend appui sur le sol (4) par le biais des deux chenilles (3) ou jeux de roues (27) exclusivement.

10. Véhicule de transport de passagers (1) selon au moins l'une quelconque des revendications précédentes, **caractérisé en ce qu'**une carrosserie (5) du véhicule de transport de passagers comporte une garde au sol (6) d'au moins 20 cm entre les chenilles (3) ou les jeux de roues (27).

11. Véhicule de transport de passagers (1) selon au moins l'une quelconque des revendications précédentes, **caractérisé en ce que** le dispositif de sélection de la direction comporte une barre directrice (17) orientée, dans sa position initiale, perpendiculairement au sens de la marche du véhicule de transport de passagers (1) et pouvant être pivotée autour d'un axe de pivotement (18) s'étendant sur le plan médian longitudinal du véhicule de transport de passagers.

12. Véhicule de transport de passagers (1) selon la revendication 11, **caractérisé en ce qu'**on a prévu un siège de conducteur (19) sur le plan médian longitudinal du véhicule de transport de passagers et **en ce qu'**on a prévu des surfaces d'appui des pieds (23) pour le conducteur, des deux côtés, le long du sens de déplacement du véhicule de transport de passagers (1), derrière la barre directrice (17), au maximum jusqu'en dessous du siège du conducteur (19).

13. Véhicule de transport de passagers (1) selon au moins l'une quelconque des revendications précédentes, **caractérisé en ce qu'**on a prévu au moins un siège de passager.

14. Véhicule de transport de passagers (1) selon au moins l'une quelconque des revendications précédentes, **caractérisé en ce que** la carrosserie (5) du véhicule de transport de passagers (1) peut flotter.

15. Véhicule de transport de passagers (1) selon au moins l'une quelconque des revendications précédentes, **caractérisé en ce qu'**on a prévu une zone, du véhicule de transport de passagers (1), munie de sièges dans une cabine au moins fermée en haut et pouvant être de préférence entièrement fermée.
